# EUROPEAN PATENT APPLICATION

(11) **EP 0 709 036 A1**
(43) Date of publication of application: **01.05.1996**
(21) Application number: 95116080.3
(22) Date of filing: 12.10.1995
(51) Int. Cl.: A23K 1/17, A23K 1/18

(54) **Growth promotion in chickens**

(30) Priority: 24.10.1994 US 328175
(71) Applicant: F. HOFFMANN-LA ROCHE AG, CH-4002 Basel (CH)
(72) Inventor: Untawale, Govind Gajanan, Wayne, New Jersey 07470 (US)
(74) Representative: Kellenberger, Marcus, Dr.

(57) **Abstract**

Methods and feed compositions for increasing the growth of and feed utilization in chicken involving the use of lasalocid and frenolicin B as the active ingredients, and premixes containing said active ingredients for formulating the chicken feed compositions.

## Description

The present invention relates to a method of increasing the growth of and feed utilization in chickens, to chicken feeds containing as active ingredients lasalocid and frenolicin B, and/or a salt or ester thereof in each case, for use in said method, and to premixes containing said active ingredients for use in formulating said chicken feeds.

Frenolicin B is a known fermentation product having antibiotic properties (see U.S. Patent Specification 4,199,514). It is also known to have anticoccidial activity and to enhance the activity of ionophorous polyether anticoccidial agents, for example lasalocid, against avian coccidiosis (see U.S. Patent Specification 4,839,382). Lasalocid itself, a polyether antibiotic produced by fermentation of streptomyces X-537, is disclosed in U.S. Patent Specifications 3,715,372, 3,836,516 and Re. 29,244.

It has now been found that the growth of and feed utilization in chickens, particularly in healthy chickens, is improved by orally administering to the chickens, conveniently in combination with their feed, sufficient amounts of the active ingredients lasalocid and frenolicin B and/or a physiologically acceptable salt or ester thereof in each case, to achieve the desired effect. Each active ingredient independently may optionally be present as such or as a physiologically acceptable salt or ester thereof since it is well known in general in the veterinary art that a physiologically acceptable salt or ester form of an active ingredient may be chosen for reasons of economy, convenience, stability etc. but that the choice of such form is immaterial in the treatment or well-being of the animals concerned. In the following description the term "lasalocid" or "frenolicin B", when used alone, or "active ingredient" is to be so understood, unless otherwise indicated, as to mean lasalocid itself or frenolicin B itself, respectively, or in each case independently a physiologically acceptable salt or ester thereof; however, where weight or other quantitative data are given, these relate to lasalocid alone or frenolicin B alone, as appropriate, or to the lasalocid or frenolicin B part of a physiologically acceptable salt or ester thereof, in which case the term "active principle(s)" may be used.

Accordingly, the present invention provides, as one aspect, a method of increasing the growth of and feed utilization in chickens comprising orally administering to such chickens effective amounts of the active ingredients lasalocid and/or a physiologically acceptable salt or ester thereof, and of frenolicin B and/or a physiologically acceptable salt or ester thereof. The method is most conveniently effected by administering the active ingredients to the chickens with their feed, whereby the feed contains an effective amount of each active ingredient.

Among the salts of lasalocid or frenolicin B which may be used in the method (and the subsequently described compositions and premixes) of the present invention are the alkali metal and alkaline earth metal salts. Of these, the sodium, potassium and calcium salts are preferred in each case. As esters of lasalocid or frenolicin B there may be used in particular the straight or branched chain lower alkyl (containing up to 7 carbon atoms) and phenyl esters. Such salts or esters are known or can be formed from lasalocid or frenolicin B, as appropriate, by conventional means.

For the purpose of effecting the method of the present invention it is generally most desirable to administer sufficient amounts of the active ingredients, preferably with the chicken feed, to provide about 50 to 70 mg of lasalocid and about 42 to 54 mg of frenolicin B per kilogram of body weight per day in the case of starter chickens, about 40 to 50 mg of lasalocid and about 34 to 40 mg of frenolicin B per kilogram of body weight per day in the case of grower chickens, and about 35 to 42 mg of lasalocid and about 33 to 35 mg of frenolicin B per kilogram of body weight per day in the case of finisher chickens. In each case the given amount of lasalocid and frenolicin relates to lasalocid or frenolicin itself or as active principle of a salt or ester thereof used, as appropriate. The averages of these range represent the amounts of medicament ingested with feed by the animals when the feed contains about 75 ppm of lasalocid and about 60 ppm of frenolicin B. These amounts can, of course, be varied depending on the size and condition of the animals.

As a further aspect the present invention provides the chicken feed composition ("medicated chicken feed") for use in the method, i.e. a chicken feed composition for increasing the growth of and feed utilization in chickens, characterized in that it contains as active ingredients effective amounts of lasalocid and/or a physiologically acceptable salt or ester thereof, and of frenolicin B and/or a physiologically acceptable salt or ester thereof.

These compositions can be prepared by mixing the active ingredients, lasalocid and frenolicin B (as such or in each case as a salt or ester thereof), either directly, or as part of a premix or concentrate, into a conventional chicken feed. It has been found that if the active ingredients are then present in the feed in the proportion about 75 ppm to about 125 ppm of lasalocid : about 15 ppm to about 75 ppm of frenolicin B, the desired growth promotion and feed utilization (efficiency) occurs. The preferred proportion is about 75 ppm lasalocid : about 30 ppm to about 60 ppm of frenolicin B.

In particular, the medicated chicken feeds can be suitably formulated by (1) adding the active ingredients directly to conventional chicken feed and mixing, for example in a vertical feed mixer; (2) forming a premix (also designated as concentrate) of the active ingredients by mixing them with a suitable non-toxic edible carrier, e.g. corn meal, corn distillers dried grains, soybean meal, soya grits, soya flour, wheat middlings, farina, rice grits, malt sprouts, limestone and the like and including various oils and the like for example, soya oil, which can be used in forming animal feed premixes, and then adding the premix to the feed and mixing, suitably in a feed mixer or blender; or (3) forming a premix of each active ingredient separately by mixing it with a suitable non-toxic edible carrier, e.g. those given above in connection with the method (2), and then adding the two premixes to the feed and mixing, also analogously to said method (2).

The above-indicated premix containing both active ingredients, e.g. one formulated in accordance with the first step of method (2) hereinbefore, is also embraced by the present invention. This premix, intended for the formulation of a chicken feed composition as defined above, is characterized in that it contains as active ingredients lasalocid and/or a physiologically acceptable salt or ester thereof, and frenolicin B and/or a physiologically acceptable salt or ester thereof, the active principles lasalocid and frenolicin B together being present in a concentration relative to the whole premix of about 5% to about 50% by weight. The proportion of said active principles is conveniently selected with due consideration to the above indicated relative amounts (mg per kilogram of body weight per day) of active ingredients administered in the method of the present invention appropriate to the age of the chickens to be fed (starter, grower or finisher). Accordingly, an average ratio would be about 75 parts of lasalocid to about 60 parts of frenolicin B, by weight. Furthermore, a sufficient amount of the active ingredients is suitably present so that the addition of approximately one kilogram of premix to the amount of feed required to total 2,000 kilograms will provide the desired dose level.

The following Examples illustrate the invention.

### Example 1

A floow-pen growth study utilizing ninety-eight 10 ft x 5 ft pens with built-up pine shavings litter (thin layer of fresh shavings added prior to start of study) was initiated by placing 2,450 one day-old male broiler type chicks (25 male Peterson x Arbor Acres broiler chicks per pen with average body weight range of approximately 35-45 g). Each of the 98 pens was partitioned to create a pen of 5 ft x 3.75 ft size, providing floor space of 0.75 sq. ft/bird. Upon arrival from the hatchery, boxes of 100 sex-separated day-old male chicks were taken in no specific order to provide the intended 25 male chicks to successive pens. As one box was emptied, another was taken until all pens contained the 25 male chicks.

Pens of 25 chicks were randomly assigned to seven dietary treatments within 14 blocks of seven adjacent pens. The seven dietary feed treatments (Table 1) were prepared by mixing the appropriate active ingredients with the starter, grower or finisher basal diet (Table 2) in a ribbon mixer appropriate for the batch size needed. Starter diets were crumbled, grower and finisher diets were pelleted. Birds on each treatment received the respective diet types for the following periods:

| Diet | Test Period (Days) |
|---|---|
| Starter | 1 - 21 |
| Grower | 22 - 38 |
| Finisher | 39 - 42 |
| Water and feed were supplied ad libitum. | |

Supplemental heat was provided from brooder heat lamps in each pen for the first 3 weeks. Ventilation of the floor-pen building was controlled by manually operated exhaust fans, and thermostatically controlled heating was available as needed. No vaccinations or therapeutic treatments were administered during the course of the study.

Birds were checked (observed) at least once daily for any abnormal findings. Any chicks that died or were culled during the first five days of the test period were replaced with birds of the same sex and from the same hatch that were kept in an extra pen on the lasalocid 75 ppm diet for that purpose. After the initial five days, the weight, sex and day of removal of any bird that died or was culled were recorded and all birds that died were necropsied.

**Table 1**

| TRT. NO. | LASALOCID (PPM) + FRENOLICIN B(PPM) | NO. REPLICATES | MALE BIRDS/PEN | TOTAL BIRDS/TREATMENT |
|---|---|---|---|---|
| 1 | 75 + 0 | 14 | 25 | 350 |
| 2 | 75 + 15 | 14 | 25 | 350 |
| 3 | 75 + 30 | 14 | 25 | 350 |
| 4 | 75 + 45 | 14 | 25 | 350 |
| 5 | 75 + 60 | 14 | 25 | 350 |
| 6 | 75 + 75 | 14 | 25 | 350 |
| 7* | 75 + VIRGINIAMYCIN | 14 | 25 | 350 |

| | | | | |
|---|---|---|---|---|
| * included as positive control. | | | | |

**Table 2**

| Ingredient Name | Percent of Feed | | |
|---|---|---|---|
| | Starter | Grower | Finisher |
| Ground yellow corn | 59.72 | 66.12 | 70.975 |
| Soybean meal | 31.20 | 24.99 | 20.296 |
| Poultry by-products | 4.00 | 4.00 | 4.000 |
| Fat, Poultry | 2.34 | 2.38 | 2.043 |
| Phosphate, defluorinated | 1.43 | 1.03 | 1.083 |
| Limestone | 0.53 | 0.71 | 0.909 |
| Sodium chloride | 0.31 | 0.31 | 0.378 |
| Vitamin premix-broiler* | 0.25 | 0.25 | 0.250 |
| Alimet (methionine liquid) | 0.17 | 0.16 | 0.170 |
| Trace minerals premix-broiler** | 0.05 | 0.05 | 0.050 |

| | | | |
|---|---|---|---|
| * Vitamin premix-broiler provides (per kg/diet): vitamin (vit.) A, 4400 IU; vit. D₃, 880 ICU; vit. E, 11 IU; riboflavin, 4.4 mg; Ca pantothenate, 9.6 mg; nicotinic acid, 44 mg; choline Cl, 220 mg; vit. B₁₂, 6.6 mg; vit. B, 2.2 mg; menadione sodium bisulfite, 3.49 mg; folic acid, 55 mg; d-biotin, 0.11 mg; thiamine mononitrate, 2.2 mg; ethoxyquin, 125 mg. | | | |
| ** Trace minerals premix-broiler provides (in ppm of diet): Mn, 60; Zn, 50; Fe, 30; Cu, 5; I, 1.05; Ca, 75 to 90. | | | |

The parameters measured during the study were:
1. Pen weights on day 0 and 42 (number and total weight of males determined for each pen on day 42).
2. Feed weigh-back at day 21, 38 and 42.
3. Weight and sex of live or dead birds at the time of removal from the pen. Weights of dead and culled birds at removal were added to total live weight of pen to adjust the feed conversion.
4. Average bird weight, average weight gain, feed consumption and feed conversion calculated per pen and treatment.
5. Necropsy of dead birds.
6. Observations of daily health status.

The results of the study are presented in Table 3 below wherein the average (av.) body weight, adjusted feed/gain and mortality figures are those measured or determined at day 42:

**Table 3**

| TREATMENT No. Las (PPM) + Fr.B (PPM) | AV. BODY WT. (grams) | ADJUSTED FEED/GAIN | MORTALITY % |
|---|---|---|---|
| 1 75 + 0 | 1720 | 1.65 | 2.57 |
| 2 75 + 15 | 1713 | 1.63^{a} | 2.29 |
| 3 75 + 30 | 1744^{a} | 1.63^{a} | 2.86 |
| 4 75 + 45 | 1739 | 1.63^{a} | 2.29 |
| 5 75 + 60 | 1759^{a,}^{b} | 1.63^{a} | 1.71 |
| 6 75 + 75 | 1741 | 1.62^{a} | 2.00 |
| 7 75 + Virginiamycin 16.5 PPM | 1726 | 1.63^{a} | 2.29 |
| Las = lasalocid Fr.B = frenolicin B | | | |

| | | | |
|---|---|---|---|
| ^{a}Significantly (P<0.05) better than treatment 1 (Las + 0 ppm Fr.B) | | | |
| ^{b}Significantly (P<0.05) better than treatment 7 (Las + virginiamycin) ("P" reflects the probability that the results can be reproduced: the smaller the P value, the greater the probability that the results can be reproduced) | | | |

These results indicate that supplementation of broiler diets with lasalocid 75 ppm plus frenolicin B at 30 and 60 ppm increased the average body weight over that achieved with lasalocid (75 ppm) alone (P<0.05). The improvement in body weight obtained with 60 ppm of frenolicin B was also significantly (P<0.05) better than with virginiamycin (16.5 ppm).

In the presence of 75 ppm of lasalocid, dietary levels from 15 to 75 ppm of frenolicin B significantly (P<0.05) improved feed conversion over that achieved with frenolicin B at 0 ppm. Lasalocid (75 ppm) + viriniamycin (16.5 ppm) significantly (P<0.05) improved feed conversion over that achieved with lasalocid 75 ppm alone.

No significant (P<0.05) differences in mortality were observed among the various treatment groups.

Weight and feed conversion were analyzed using standard least squares analysis of variance (ANOVA) methods (see "Basic Statistics: A Modern Approach" by Morris Hamburg, Harcourt Brace Jovanovich, Inc. 1974, e.g. pages 168-170 for tailed (t) tests). Two-way models containing terms for treatment and block main effects were fit to the weight and feed conversion data. Linear-plateau models were fit to each of the response variables. A one-sided paired tailed (t) test was used to compare treatment groups with controls. Variance was estimated by two-way ANOVA mean standard error (MSE). Linear-plateau modelling of weight indicates no improvement up to a threshold of 15 ppm, after which there is rapid improvement up to 30 ppm, with a plateau above 30 ppm. The minimum effective dose is 30 ppm for weight gain. For feed conversion there is rapid improvement from 0 to 15 ppm, with a plateau above 15 ppm. The minimum effective dose for feed conversion is 15 ppm.

### Example 2

Frenolicin B (332.9 g, average assay 90.85% frenolicin B) is mixed with 5,746.54 g of rice hulls in a mixer until a homogeneous blend has been produced.

In a separate operation, 20 g of mineral oil are mixed with 800 g of corn colbs, and to the mixture are added 150 g of lasalocid. The whole is mixed, a further 20 g of mineral oil added, and mixing continued until a homogeneous blend has been produced.

Finally, the two blends are combined in an appropriate weight ratio to give a weight ratio lasalocid:frenolicin B amounting to approximately 75:60 in the so formulated premix.

1 kilogram of said premix can be blended with 1999 kilograms of conventional chicken feed to afford 2000 kilograms of medicated chicken feed.

## Claims

1. A method of increasing the growth of and feed utilization in chickens characterized in orally administering to chickens effective amounts of the active ingredients lasalocid and/or a physiologically acceptable salt or ester thereof and of frenolicin B and/or a physiologically acceptable salt or ester thereof.

2. A method according to claim 1, wherein the method is effected by administering the active ingredients to the chickens with their feed, whereby the feed contains an effective amount of each active ingredient.

3. A method according to claim 1 or 2, wherein the amount of lasalocid and frenolicin B administered per kilogram of body weight per day is about 50 to 70 mg and about 42 to 54 mg, respectively, in the case of starter chickens, about 40 to 50 mg and about 34 to 40 mg, respectively, in the case of grower chickens, and about 35 to 42 mg and about 33 to 35 mg, respectively, in the case of finisher chickens.

4. A chicken feed composition for increasing the growth of and feed utilization in chickens, characterized in that it contains as active ingredients effective amounts of lasalocid and/or a physiologically acceptable salt or ester thereof, and of frenolicin B and/or a physiologically acceptable salt or ester thereof.

5. A chicken feed composition according to claim 4, wherein the active ingredients are present in the proportion about 75 ppm to about 125 ppm of lasalocid: about 15 ppm to about 75 ppm of frenolicin B.

6. A chicken feed composition according to claim 5, wherein the proportion is about 75 ppm of lasalocid: about 30 ppm to about 60 ppm of frenolicin B.

7. A premix intended for the formulation of a chicken feed composition as defined in any one of claims 4 to 6, characterized in that it contains as active ingredients lasalocid and/or a physiologically acceptable salt or ester thereof, and frenolicin B and/or a physiolically acceptable salt or ester thereof, the active principles lasalocid and frenolicin B together being present in a concentration of about 5% to about 50% by weight.

8. A premix according to claim 7, wherein the amounts of lasalocid and frenolicin B are in the ratio about 75 parts of lasalocid to about 60 parts of frenolicin B, by weight.

9. A method of formulating a chicken feed composition as defined in any one of claims 4 to 6, characterized by (1) adding the active ingredients directly to conventional chicken feed and mixing; (2) forming a premix of the active ingredients by mixing then with a suitable non-toxic edible carrier and then adding the premix to the feed and mixing; or (3) forming a premix of each active ingredient separately by mixing it with a suitable non-toxic edible carrier and then adding the two premixes to the feed and mixing.
